Europäisches Patentamt

European Patent Office

Office européen des brevets

(19)

(11) Numéro de publication: **0 033 705**
**B1**

# (12) FASCICULE DE BREVET EUROPEEN

(45) Date de publication du fascicule du brevet: **30.04.86**

(51) Int. Cl.⁴: **G 01 G 7/06**

(21) Numéro de dépôt: **81400164.0**

(22) Date de dépôt: **03.02.81**

(54) **Dispositif de mesure de capacité pour instrument de pesage.**

(30) Priorité: **04.02.80 FR 8002376**

(73) Titulaire: **TESTUT-AEQUITAS**
**8, rue Popincourt**
**F-75011 Paris (FR)**

(43) Date de publication de la demande:
**12.08.81 Bulletin 81/32**

(72) Inventeur: **Dauge, Gilbert Victor**
**15, Quai du Pré Long**
**F-77400 Lagny (FR)**
Inventeur: **Langlais, Jacques Fernand**
**38, rue des Ecoles**
**F-77000 Coudray Montceaux (FR)**

(45) Mention de la délivrance du brevet:
**30.04.86 Bulletin 86/18**

(84) Etats contractants désignés:
**AT BE CH DE GB IT LI LU NL SE**

(74) Mandataire: **Martin, Jean-Jacques et al**
**Cabinet REGIMBEAU 26, Avenue Kléber**
**F-75116 Paris (FR)**

(56) Documents cités:
**FR-A-1 593 899**
**FR-A-2 043 421**
**FR-A-2 142 732**
**FR-A-2 381 295**
**FR-A-2 404 229**
**FR-A-2 410 280**
**US-A-4 115 767**

Le dossier contient des informations
techniques présentées postérieurement au
dépôt de la demande et ne figurant pas dans le
présent fascicule.

Courier Press, Leamington Spa, England.

EP 0 033 705 B1

## Description

La présente invention concerne un dispositif de mesure de capacité, appliqué aux instruments de pesage du type à transducteur capacitif.

Dans un tel instrument de pesage, on transforme la valeur de la charge à mesurer en celle d'une capacité. Pour une charge nulle, les deux électrodes de la capacité sont rapprochées, définissant donc une valeur de capacité maximale. Lorsque la charge augmente, les électrodes s'écartent, et la valeur de la capacité diminue, jusqu'à une valeur minimale qui correspond à la pleine échelle de mesure de l'instrument de pesage.

De nombreux dispositifs ont été proposés pour mesurer une capacité variable, par exemple celui décrit dans le FR—A—2 142 732. Mais, dans l'application au pesage, il se trouve que le poids à mesurer est inversement proportionnel à la capacité. Il est donc apparu souhaitable non plus de déterminer la valeur de la capacité, mais l'inverse de cette valeur. L'inverse de la capacité croît en effet linéairement avec le poids.

Pour cette raison, dans le FR—A—2 404 229, la demanderesse a proposé un dispositif du type comprenant les caractéristiques énoncées dans le préambule de la revendication principale.

Plus précisément, ce document propose d'insérer alternativement deux capacités dans un oscillateur à relaxation, dont la fréquence de fonctionnement est inversement proportionnelle à la valeur de la capacité commutée. Le même oscillateur fonctionne donc tantôt avec la capacité à mesurer, et tantôt avec une capacité étalon.

De ce "multiplexage" d'un même oscillateur entre la capacité à mesurer et la capacité étalon, il résulte des difficultés de mise au point de diverses natures, en particulier au plan des ajustements requis pour le réglage de l'ensemble de l'instrument de pesage.

En outre, ce dispositif ne dispense pas de l'emploi d'une base de temps de référence (circuit 22), c'est-à-dire d'un autre oscillateur permettant de définir les durées des phases respectives de mesure et d'étalonnage de chaque cycle de comparaison. Bien au contraire, la précision de la mesure finale est directement dépendante de la précision et de la stabilité de la fréquence d'horloge de cette base de temps de référence.

Le FR—A—2 381 295 décrit également un dispositif du type précité, où un convertisseur capacité-fréquence fournit une fréquence d'oscillation proportionnelle au poids, avec mémorisation de la fréquence délivrée pour une charge nulle. Mais la précision finale est, de la même façon, conditionnée par celle de la base de temps de référence (circuit 400).

On sait que les oscillateurs à quartz permettent de réaliser des bases de temps très stables, peu sujettes aux dérives dans le temps et sous l'effet de la température. Néanmoins, le coût de ces circuits empêche leur application aux produits de grande diffusion.

L'invention vient pallier cette difficulté, en proposant un dispositif de mesure de capacité pour instrument de pesage qui soit de conception simple, réalisé à partir de composants peu coûteux, tout en présentant une excellente immunité aux effets de dérive qui pourraient influer sur la stabilité et la précision du résultat final.

A cet effet, le dispositif de l'invention, qui est du type précité auquel appartient le FR—A— 2 404 229, présente les éléments énoncés dans la partie caractérisante de la revendication 1.

De la sorte, une dérive—par exemple une dérive thermique—affectera sensiblement dans les même proportions les deux oscillateurs, et donc les deux fréquences FM et FE qui varieront dans un même rapport. En procédant par division de fréquence, le circuit de calcul éliminera systématiquement l'erreur qui en aurait autrement résulté.

Selon un mode de réalisation préférentiel, le fonctionnement du premier convertisseur capacité-fréquence est continu, tandis que le fonctionnement du second convertisseur capacité-fréquence est intermittent avec alternance de phases de fonctionnement, permettant la détermination de la valeur numérique P, et d'inhibition, après détermination de cette valeur numérique P, le début de chaque phase de fonctionnement étant synchronisé en phase sur la fréquence de mesure FM, délivrée par le premier convertisseur capacité-fréquence.

Dans un mode de réalisation particulier, chaque convertisseur capacité-fréquence comprend un amplificateur opérationnel sur lequel la capacité associée est branchée en montage intégrateur, suivi d'un circuit comparateur à deux sorties dont l'une fournit la fréquence de sortie FM; FE et l'autre est bouclée sur l'entrée inverseuse de l'amplificateur opérationnel.

Très avantageusement, le seuil de déclenchement de l'un des circuits comparateurs est réglable.

De préférence, le premier convertisseur capacité-fréquence comporte un moyen capacitif pour compenser ses retards internes.

Dans un autre mode de réalisation particulier, le premier convertisseur capacité-fréquence comporte des moyens pour la production d'un signal de correction qui modifie le seuil de comparaison d'une quantité inversement proportionnelle à la fréquence de mesure FM, le coefficient étant réglable. On peut ainsi effectuer un réglage du zéro de l'appareil sans en modifier d'étendue de mesure.

Selon un autre aspect de la présente invention, la connexion entre une armature du transducteur capacitif et l'entrée inverseuse de l'amplificateur opérationnel associé est blindée, ce blindage est relié au châssis métallique voisin du transducteur, et il est prévu un autre amplificateur opérationnel apte à annuler la différence de potentiel existant entre ladite connexion, d'une part, et le blindage et le châssis, d'autre part.

Selon un autre aspect de la présente invention, le circuit compteur de mesure comporte un premier étage compteur à décade, et les moyens logiques sont commutables pour n'autoriser le comptage que sur un nombre entier de périodes du compteur à décade, ce qui permet d'arrondir sur commande un chiffre de la valeur numérique P affichée. On peut ainsi obtenir un instrument de pesage avec "loupe".

Selon un autre aspect encore de la présente invention, le compteur de mesure est au moins pour partie un compteur préréglable, et il est prévu un moyen de commande pour prérégler un nombre N en agissant sur ce compteur pour un état prédéterminé de la capacité à mesurer, tel que l'absence de charge sur l'instrument de pesage. On réalise ainsi de manière simple une remise à zéro automatique de l'instrument de pesage.

D'autres caractéristiques et avantages de l'invention apparaîtront à la lecture de la description détaillée que va suivre, faite en référence aux dessins annexés, sur lesquels:

la figure 1 illustre schématiquement un exemple d'instrument de pesage muni d'un transducteur capacitif;

la figure 2 illustre le schéma électrique général des circuits électroniques prévus selon la présente invention pour être associés à un instrument de pesage à transducteur capacitif;

la figure 3 illustre le schéma électrique détaillé des éléments de commande marche-arrêt, d'alimentation, et des deux convertisseurs capacité-fréquence apparaissant sur la figure 2;

la figure 4 illustre le schéma électrique détaillé du circuit de calcul ainsi que du circuit d'affichage apparaissant sur la figure 2;

les figures 5A à 5E illustrent des formes d'ondes apparaissant en différents points du circuit de la figure 3;

les figures 6A à 6L illustrent des formes d'ondes apparaissant en différents points du circuit de la figure 4; et

la figure 7 illustre une variante du circuit de la figure 4, qui permet la remise à zéro automatique.

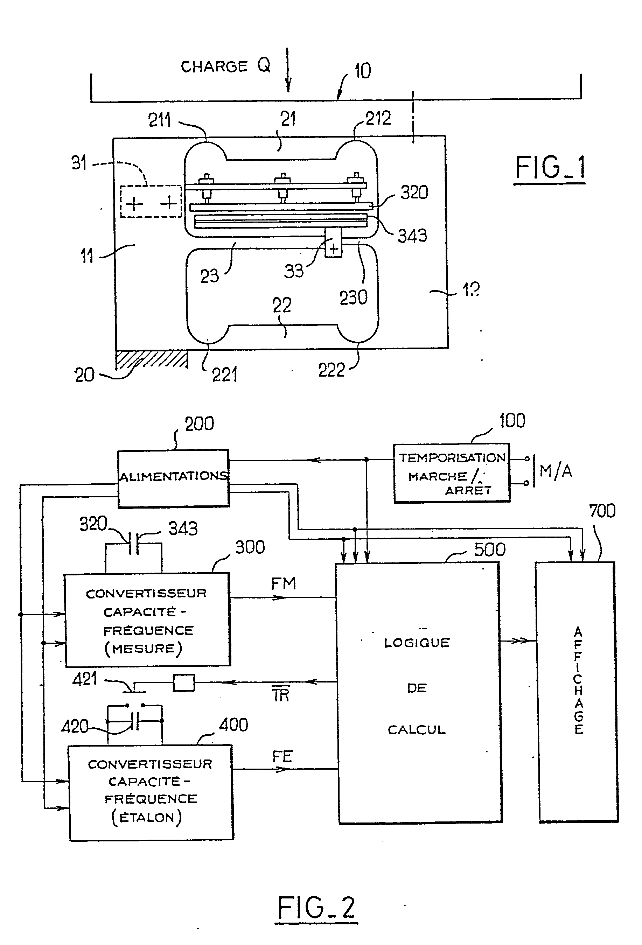

Sur la figure 1 est illustré le récepteur de charge d'un exemple d'instrument de pesage à transducteur capacitif. Sur un bâti 20 est monté un parallélogramme déformable monobloc, constitué de quatre montants 11, 12, 21 et 22, réunis par des étranglements 211, 212, 221 et 222. Le montant vertical 11 repose directement sur le bâti 20, tandis que le montant 12 est sollicité par la charge Q posée sur le plateau porte-charge 10 qui lui est relié. Sur le montant fixe 11 est fixé le support 31 d'une première électrode 320. Sur un bras fléchissant intermédiaire 23 monté entre les montants 11 et 12 est fixé le support 33 de la seconde électrode 343, qui forme avec la première 320 un transducteur capacitif. Au repos, la première électrode 320 peut être déplacée pour régler l'écartement entre les deux électrodes à la valeur désirée, à laquelle correspond la capacité maximale. En présence d'une charge, les deux électrodes vont s'écarter, d'où une diminution de la capacité. Ainsi se trouve définie la capacité variable liée à la charge à mesurer.

Ce montage correspond à la figure 1 de la demande de brevet FR—A—2 453 396 de la demanderesse (date de la mise à la disposition du public; 31.10.80), à laquelle on se référera pour de plus amples détails. On notera que cette demande de brevet décrit également des moyens pour constituer la capacité étalon en réalisant un récepteur de charge semblable à celui qui est illustré en figure 1, mais qui sert uniquement de référence, en n'est jamais chargé. La même demande fournit également des relations à respecter entre les différentes dimensions du parallélogramme déformable ainsi que des supports des armatures. En respectant ces relations à la fois pour le récepteur de charge effectif et pour le récepteur de charge de référence, on obtient une excellente compensation de la variation en fonction de la température du module d'élasticité du matériau constituant le parallélogramme déformable et l'absence de tout décalage du zéro en fonction de la température.

Une autre manière d'obtenir ces mêmes avantages consiste à choisir comme capacité étalon un condensateur discret dont la variation en fonction de la température est égale à la variation du module d'élastiqué (module d'Young) du matériau constituant le récepteur de charge et bien entendu à respecter pour le récepteur de charge effectif les relations précitées.

Bien entendu, le récepteur de charge à transducteur capacitif illustré ici en figure 1 n'est qu'un exemple, et on pourra utiliser de nombreux autres types de récepteurs de charge, en particulier ceux décrits dans la demande FR—A—2 456 310 (publiée le 05.12.80) ou bien FR—A—2 469 701 (publiée le 22.05.81), au nom de la demanderesse. Les remarques ci-dessus s'y appliquent également.

Sur le schéma de principe de la figure 2, on voit un premier convertisseur capacité-fréquence 300, auquel est branchée la capacité à mesurer définie par ses deux armatures 320 et 343; il apparaît également un second convertisseur capacité-fréquence 400, auquel est branchée la capacité étalon 420. En parallèle sur celle-ci se trouve un interrupteur 421, constitué par exemple d'un transistor à effet de champ, et susceptible de court-circuiter sur commande la capacité étalon 420. La fréquence de mesure FM définie par le convertisseur 300 et la fréquence étalon FE définie par le convertisseur 400 sont appliquées à un circuit de calcul 500, qui à son tour excite un dispositif d'affichage numérique 700. Le montage comprend enfin un circuit d'alimentation 200, ainsi qu'un circuit 100 de commande de marche-arrêt, qui réagit par une mise en service temporisée des circuits électroniques en réponse à l'actionnement d'un bouton-poussoir de marche-arrêt M/A.

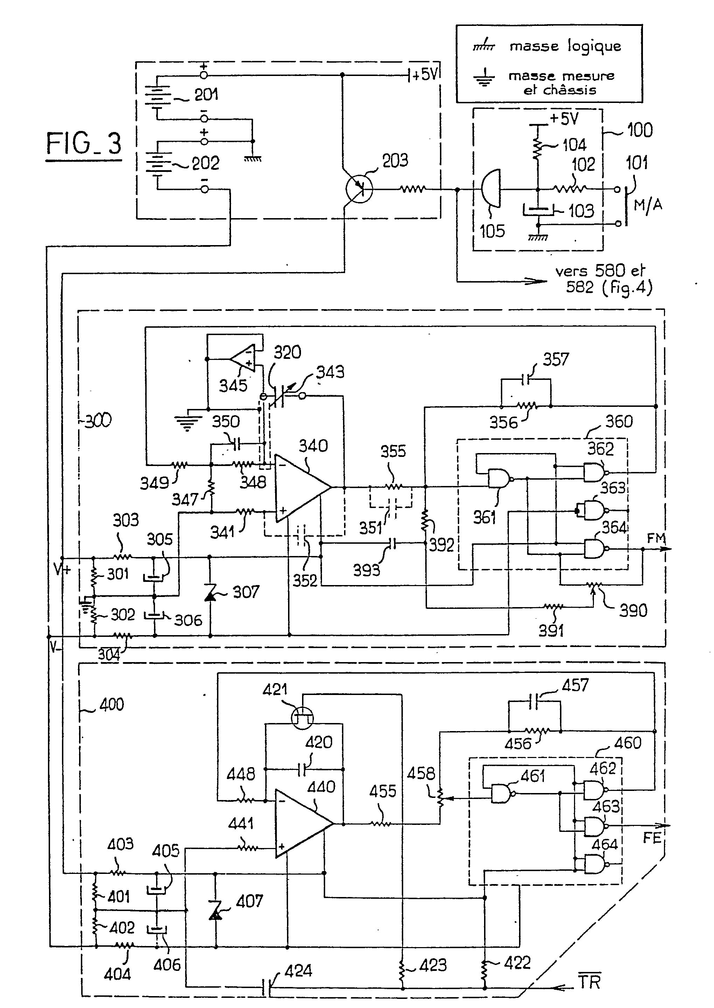

Sur la figure 3, le circuit d'alimentation 200 comporte deux batteries de piles 201 et 202, dont le point milieu est relié à la masse des circuits logiques, tandis que le pôle positif définit une tension de 5 V en direction des circuits logiques du montage, à savoir les composants du bloc 100, du bloc 500, ainsi que du bloc 700. On notera que cette tension de 5 V est appliquée en permanence, ce qui ne tire pas à conséquence sur le plan de la consommation, ce circuit logique étant réalisé avantageusement en technologie MOS complémentaire.

Le bouton-poussoir de marche-arrêt 101 est relié d'une part à la masse des circuits logiques, et d'autre part par une résistance 102 au point commun à une résistance 104 qui va vers le 5 V logique, et à un condensateur 103 qui va vers la masse. La charge du condensateur 103, qui dure pendant une minute environ, excite une porte 105, laquelle commande le transistor 203 incorporé à l'alimentation 200, afin d'alimenter les deux convertisseurs capacité-fréquence 300 et 400. La sortie de la porte 105 est également appliquée au circuit 500, à des fins de remise à zéro initiale.

On note V+ et V− les deux tensions d'alimentation ainsi appliquées aux convertisseurs capacité-fréquence. Dans le convertisseur 300, ces deux tensions sont reçues, et deux résistances égales 301 et 302 sont branchées en série entre V+ et V−, leur point milieu définissant la masse du premier convertisseur capacité-fréquence. La ligne V+ est également reliée par une résistance 303 à un condensateur 305 qui va vers la masse en question, tandis que de son côté la ligne V− est reliée par une résistance 304 à un condensateur 306 qui va toujours à la même masse. Entre les bornes extrêmes des condensateurs 305 et 306 est branchée une diode Zener 307, qui réalise une régulation de tension. Cet ensemble, de type connu, stabilise la tension d'alimentation du convertisseur 300. Le même montage existe dans le convertisseur 400; il ne sera pas décrit à nouveau, étant observé que les mêmes éléments ont la même référence augmentée de 100. On notera simplement que le point milieu des résistances 401 et 402 n'est pas relié à la masse de l'ensemble, de façon à éviter la circulation de courants de masse.

Le premier convertisseur 300 comporte un amplificateur opérationnel 340, dont l'entrée non-inverseuse est reliée par une résistance 341 à la masse, c'est-à-dire au point commun des résistances 301 et 302. Ce même point est relié par une résistance 347, puis par une résistance 348 à l'entrée inverseuse de l'amplificateur opérationnel 340. L'armature 320 de la capacité à mesurer est également reliée à cette entrée inverseuse, tandis que l'autre armature 343 est reliée à la sortie de l'amplificateur 340, formant ainsi un montage intégrateur. Enfin, l'amplificateur 340 est alimenté par la tension aux bornes de la diode Zener 307.

La sortie de l'amplificateur 340 est relié par une résistance 355 à l'entrée d'un montage comparateur 360, constitué de quatre portes NON-ET 361 à 364, elles aussi alimentées par la tension aux bornes de la diode 307. La porte 363 est ici inactive. L'entrée du comparateur 360 est constituée par l'une des entrées de la porte 361, dont la sortie est connectée à une entrée des portes 362 et 364. L'autre entrée des portes 362 et 364 est reliée en commun, ainsi qu'à la seconde entrée de la porte 361. L'homme de l'art comprendra que ce montage a vocation à fonctionner en basculeur de Schmitt. La sortie de la porte NON-ET 362 est ramenée par un réseau parallèle résistance 356 capacité 357 sur l'entrée de l'ensemble du comparateur, c'est-à-dire le point commun entre la résistance 355 et l'une des entrées de la porte 361. Les résistances 355 et 356 définissent le seuil à partir duquel va se déclencher le comparateur, aussi bien pour les tensions positives que pour les tensions négatives par rapport à la masse. Enfin, la sortie de la porte 362 est ramenée par une résistance 349 au point commun des résistances 347 et 348, et par là sur l'entrée inverseuse de l'amplificateur 340.

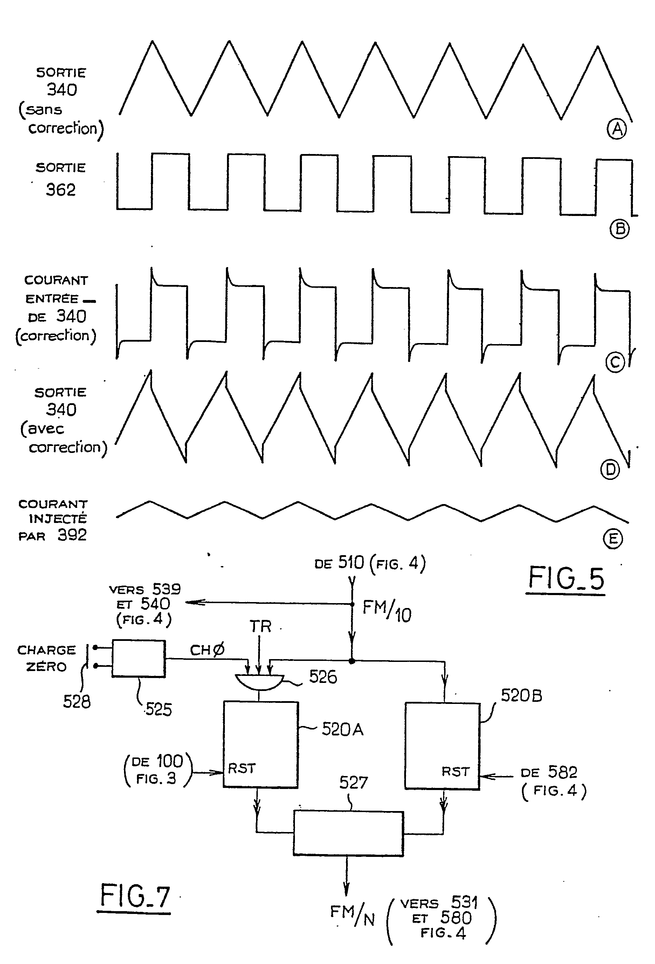

Fonctionnant en intégrateur, cet amplificateur 340 va donc voir sa tension de sortie monter (figure 5A), pendant que la sortie de la porte 362 est au niveau bas. Lorsque la sortie dépasse le seuil du comparateur, celui-ci va s'inverser, la sortie de la porte 362 passant alors brutalement au niveau haut, tandis que l'amplificateur 340 va maintenant intégrer avec la polarité inverse, ce qui fournit une dent de scie alternative et symétrique (figure 5A). La sortie de la porte 362 sera de son côté une tension en créneau, dont la forme générale est illustrée sur la figure 5B.

Le fonctionnement du second convertisseur capacité-fréquence 400 est sensiblement le même. Le point milieu des résistances 401 et 402 est relié par une résistance 441 à l'entrée non-inverseuse de l'amplificateur opérationnel 440. Entre son entrée inverseuse et sa sortie, celui-ci reçoit la capacité étalon 420. La sortie de l'amplificateur 440 est reliée par une résistance 455 et une partie d'un potentiomètre 458 à un circuit comparateur 460 à quatre portes NON-ET 461 à 464. La porte 464 est inactive. La sortie de la porte 461 est reliée en commun à une entrée de la porte 462 et à une entrée de la porte 463. L'autre entrée de ces deux portes également reliées en commun, ainsi qu'à la seconde entrée de la porte 461, reçoit la tension positive aux bornes de la diode Zener 407. Enfin, la sortie de la porte NON-ET 462 est ramenée d'une part par un réseau parallèle résistance 456-capacité 457 à l'autre extrémité du potentiomètre 458. La sortie de la porte 462 est encore ramenée par une résistance 448 à l'entrée inverseuse de l'amplificateur opérationnel 440. Là encore, la sortie de l'amplificateur 440 est de la forme illustrée à la figure 5A, tandis que la sortie du comparateur 460 (porte 462 par exemple) est de la forme illustrée sur la figure 5B.

Un signal $\overline{TR}$ est appliqué à une résistance 422 qui va vers la tension positive aux bornes de la diode Zener 407, ainsi qu'à un condensateur 424 qui va vers la point commun des résistances 401 et 402, et aussi à une résistance 423 qui vient commander la grille d'un transistor à effet de champ 421 monté aux bornes de la capacité étalon 420. Lorsque le signal $\overline{TR}$ est au niveau zéro, c'est-à-dire que le signal TR est vrai, le transistor à effet de champ 421 est rendu conducteur, et la capacité étalon 420 demeure court-circuitée, empêchant le fonctionnement du convertisseur capacité-fréquence 400.

La capacité étalon 420 étant de valeur fixe, le fonctionnement du convertisseur capacité-fréquence 400 ne soulève pas de difficulté particulière. On notera simplement que le potentiomètre 458 permet de régler la valeur de la fréquence étalon FE fournie par la sortie de la porte 463, et par là de définir la valeur numérique associée à la pleine échelle de mesure, d'une manière que l'on comprendra mieux plus loin.

En revanche, le premier convertisseur 300 fonctionne avec une capacité variable, et par conséquent à une fréquence variable. Pour les faibles valeurs de la capacité (charge à mesurer importante), la fréquence de mesure FM fournie par la sortie de la porte 364 peut prendre des valeurs importantes, valeurs pour lesquelles les retards internes à ce premier convertisseur 300 deviennent non négligeables. La demanderesse a trouvé différents moyens de compenser ce retard.

Selon un premier moyen de compensation, un condensateur 350 est monté en parallèle sur la résistance 348. Au lieu de la forme illustrée à la figure 5B, le courant injecté sur l'entrée inverseuse de l'amplificateur 340 possède alors la forme illustrée en figure 5C, c'est-à-dire avec une légère crête après chaque déclenchement du comparateur. Par le jeu du condensateur 350, on donne ainsi un supplément de charge initiale à la capacité à mesurer 321, 343, et ce supplément de charge vient compenser l'effet des retards. La sortie de l'amplificateur 340 possède alors la forme de la figure 5D.

On peut également remplacer le condensateur 350 par un condensateur 351, illustré en trait tireté, et branché en parallèle sur la résistance 355. Un autre moyen de compensation encore consiste au lieu des condensateurs 350 ou 351, à placer un condensateur 352, également illustré en trait tireté, entre l'entrée non-inverseuse et la sortie de l'amplificateur opérationnel 340. L'effet est alors d'amener à l'entrée du comparateur un signal de la forme illustrée sur la figure 5D.

Le seuil de comparaison est alors modifié d'une quantité proportionnelle à la fréquence de mesure FM.

Une autre difficulté de réglage apparaît, en particulier dans le domaine des instruments de pesage, à savoir le réglage du zéro de l'appareil, qui intervient au niveau de la valeur minimale de la fréquence de mesure FM. On se rappellera que la porte NON-ET 364 a l'une de ses entrées reliée à une entrée de la porte 361, ainsi que de la porte 362, et également à la tension positive aux bornes de la diode Zener 307. L'autre entrée de la porte 364 est reliée à la sortie de la porte 361. On retrouve donc entre cette dernière entrée de la porte 364 et sa sortie une tension qui représente un créneau de la forme illustrée sur la figure 5B.

Selon un mode de realisation avantageux de la présente invention, cette tension est appliquée aux bornes extrêmes d'un potentiomètre 390, dont le curseur est relié à une résistance 391, qui à son tour est reliée au point commun d'une résistance 392 allant vers l'entrée du comparateur 360 (point commun de la résistance 355 et de la porte 361), et d'autre part à un condensateur 393, qui va vers la tension positive aux bornes de la diode Zener 307. Par le jeu de la résistance 391 et du condensateur 393, on réalise une intégration de la tension en créneau de la forme illustrée sur la figure 5B, et une fraction de la tension ainsi intégrée est appliquée par la résistance 392 au point commun des résistance 355 et 356, c'est-à-dire à l'entrée du comparateur. Ainsi, la résistance 392 ajoute à l'entrée du comparateur un courant de la forme illustrée à la figure 5E. De cette façon, on superpose à la tension en créneau une fraction de la rampe ainsi obtenue par intégration. En d'autres termes, on ajoute au signal de la figure 5B une fraction du signal de la figure 5A. On modifie ainsi le seuil de comparaison d'une quantité inversement proportionnelle à la fréquence FM, le coefficient étant réglable par le potentiomètre 390. Cette façon de procéder permet de régler le zéro de pesage, sans pour autant modifier la relation qui existe entre une variation de la capacité à mesurer, et la variation correspondante de la fréquence de mesure FM (étendue de mesure).

Une autre difficulté couramment rencontrée avec les instruments de pesage est qu'ils doivent fonctionner dans des ambiances très diverses, par exemple des salles de bains pour un pèse-personne, ambiances dans lesquelles l'humidité est parfois très importante. La demanderesse a observé qu'il en résultait l'apparition d'impédances parasites entre l'électrode 320 de la capacité à mesurer et le châssis de l'appareil. Un mode particulier de realisation de la présente invention permet d'éviter cet effet indésirable. Pour cela, la liaison entre l'armature 320 et l'entrée inverseuse de l'amplificateur 340 est avantageusement blindée, ce blindage étant alors relié à la masse du châssis.

Enfin, cette masse est maintenue au même potentiel que l'armature 320, en utilisant par exemple un amplificateur opérationnel 345 dont l'entrée inverseuse est bouclée sur sa sortie, reliée à ladite masse, tandis que son entrée non-inverseuse est reliée à l'armature 320 de la capacité à mesurer. Là encore, on peut utiliser des variantes, en particulier en prélevant un signal dans le comparateur 360, puisque l'intégration du créneau de la figure 5B fournit un signal en dent de scie de la forme illustrée sur la figure 5A, donc exactement une tension de même forme que celle présente sur l'armature 320 (sous réserve d'une inversion).

La présente invention permet donc un réglage satisfaisant des paramètres de transformation de la capacité à mesurer en fréquence. Dans la suite, on admettra que ces réglages sont effectués de telle sorte que la valeur maximale de la fréquence de mesure, notée FM max est égale à dix fois la valeur de la fréquence étalon FE, et que la valeur minimale de la fréquence de mesure, notée FM min est égale à la moitié de la valeur maximale FM max.

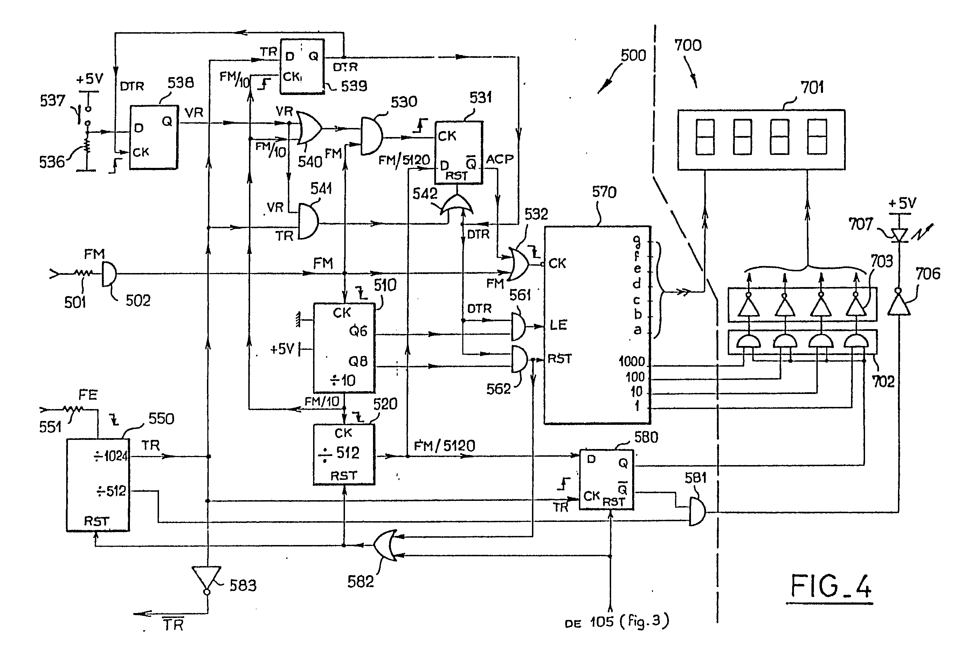

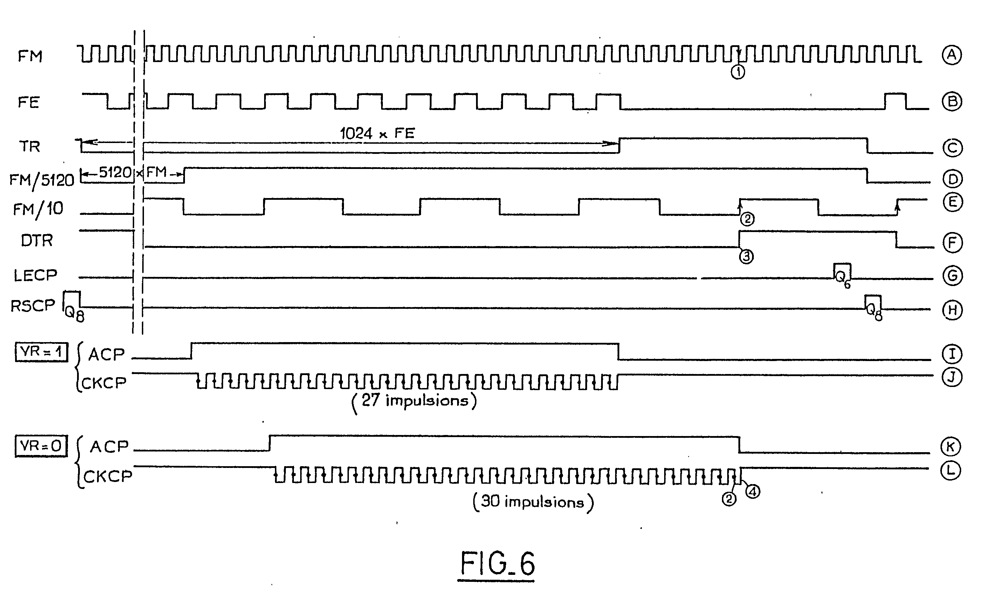

On se référera maintenant à la figure 4; ainsi qu'aux formes d'ondes correspondantes illustrées sur la figure 6.

La fréquence étalon FE (figure 6B) est appliquée à un compteur 550, à dix bits, et dont le bit le plus significatif fournit un signal de sortie TR, qui change d'état au bout de 1024 fronts descendants de la fréquence FE. A l'aide de ce signal TR, on va rechercher combien d'impulsions à la fréquence de mesure FM il y a dans 1024 impulsions à la fréquence FE. Et il faudra bien entendu tenir compte du fait que la fréquence minimale de mesure FM min correspond à un poids pesé nul.

De son côté, la fréquence de mesure FM est appliquée à travers une résistance 501 et une porte de mise en forme 502 d'une part à un compteur décimal 510 à une seule décade, qui compte sur ses fronts descendants, d'une autre part à une porte ET 530, sur l'une de ses entrées, et d'autre part enfin, à une porte OU 532. Le compteur 510 est par exemple du type "4017", vendu par NATIONAL SEMICONDUCTOR. La fréquence FM étant produite en permanence, le compteur 510 tourne en permanence. Il possède une sortie divisée par dix, qui fournit un signal FM/10; le compteur 510 étant déclenché sur les fronts descendants de la fréquence FM, ce signal FM/10 va changer d'état à chaque cinquième front descendant, en utilisant la retenue au passage à cinq qui est interne au compteur. La forme du signal FM/10 est illustrée sur la figure 6E.

Le compteur 510 est suivi d'un second compteur 520, diviseur par 512, qui réagit aux fronts descendants du signal FM/10. Une sortie du compteur 520 fournit un signal noté FM/5120, qui va changer d'état au bout de 5120 impulsions à la fréquence de mesure FM.

Une bascule 538 fournit par ailleurs un signal VR, dont on admettra pour le moment qu'il est à la valeur logique 1. Ce signal VR est appliqué en même temps que le signal FM/10 à une port OU 540, dont la sortie est donc elle aussi à l'état logique 1, validant ainsi la porte ET 530. Celle-ci laisse donc passer les impulsions à la fréquence FM qu'elle reçoit, et les fronts montants de ces impulsions sont appliqués à l'entrée d'horloge d'une bascule 531 du type D, dont l'entrée de commande D reçoit le signal FM/5120.

Lorsque 5210 impulsions à la fréquence FM ont été comptées par les compteurs 510 et 520, le signal FM/5120 passe au niveau logique 1, et la bascule 531 change d'état sur le front montant immédiatement suivant du signal FM, sa sortie $\overline{Q}$ délivrant alors un signal ACP qui passe à zéro. Le signal ACP est appliqué à la porte OU 532, et, passant à zéro, il permettra à celle-ci de laisser passer les impulsions à la fréquence de mesure FM, dont les fronts descendants apparaissent alors sur la sortie de cette porte 532 pour être appliqués à l'entrée d'horloge CK du compteur mémoire (latch) 570, qui est par exemple le modèle "74C925" de NATIONAL SEMICONDUCTOR.

D'un autre côté, le signal VR, supposé au niveau 1, est appliqué aussi à une porte ET 541, qui reçoit le signal TR déjà mentionné, et du fait que le signal VR est au niveau 1, le signal TR va passer cette porte ET 541 pour aboutir à une porte OU 542, dont la sortie commande la remise à zéro de la bascule 531, et par conséquent remettre à zéro cette même bascule, ce qui fait passer sa sortie $\overline{Q}$ à l'état 1, et interdit de ce fait le passage des impulsions à la fréquence de mesure FM à travers la porte OU 532 vers le compteur 570.

Dans le cas où VR=1, l'intervalle de temps de comptage du compteur 570 est donc défini par le signal ACP de la figure 6I, et le nombre d'impulsions comptées est illustré par le signal CKCP de la figure 6J. Cette figure montre, à titre d'exemple, que le compteur voit 27 impulsions, c'est-à-dire 27 fronts descendants, dans l'exemple représenté. La valeur numérique obtenue, ici 27, est ensuite affichée d'une manière que l'on décrira plus loin.

Le montage illustré sur la figure 4 comporte par ailleurs une bascule 539, du type D, qui reçoit sur son entrée d'horloge le signal FM/10, actif par ses fronts montants, et sur son entrée D le signal TR déjà mentionné. La sortie Q de la bascule 539 fournit donc un signal décalé par rapport au signal TR, et ce signal est noté DTR. Sa forme est illustré sur la figure 6F, et l'on voit que le signal DTR va monter au niveau 1 lors du premier front montant du signal FM/10, après que le signal TR est passé au niveau 1. Et ce signal DTR revient au niveau zéro au premier front ascendant du signal FM/10, après que le signal TR soit redescendu au niveau zéro.

On admettra maintenant que le signal VR est au niveau zéro. La sortie de la porte 540 est alors au niveau 1 que lorsque le signal FM/10 est lui-même au niveau 1. A son tour, la sortie de la porte ET 530 ne sera au niveau 1 que lorsque les signaux FM et FM/10 seront tous deux au niveau 1. L'entrée d'horloge de la bascule 531 ne sera donc déclenchée que sur le premier front montant du signal FM qui suit lui-même un front montant du signal FM/10. Ce cas où VR est à zéro est illustré sur la figure 6K, où l'on voit que la montée du signal ACP est retardée par rapport à ce qui existait sur la figure 6I. Il reste à définir la fin du signal ACP, c'est-à-dire son retour à zéro.

Du fait que le signal VR est maintenant à zéro la porte 541 est inactive, et c'est le signal DTR lui-même qui va venir à travers la porte OU 542 assurer la remise à zéro de la bascule 531. Cette bascule ne revient à zéro, pour interrompre le comptage dans le compteur 570, que lorsque le signal DTR remonte au niveau 1. On voit immédiatement que le comptage ne va alors se produire que pendant un nombre entier de décades définies par le compteur 510. Il en résulte que la valeur mesurée est arrondie. Effectivement, en comptant le nombre de fronts descendants présents dans le signal CKCP de la figure 6L, on voit que ce signal comporte maintenant 30 impulsions, la valeur numérique 30 constituant l'arrondi ordinaire de la valeur 27.

On observera que pour le comptage de la toute dernière impulsion (la trentième), il convient de tenir compte des retards introduits par les porte et bascule. Dans un intervalle de temps très bref, il intervient d'abord un front descendant du signal FM de la figure 6A, marqué par le chiffre 1 dans un cercle, puis le front montant du signal FM/10 (noté 2 sur la figure 6E), en même temps qu'un front descendant du signal CKCP (également noté 2 sur la figure 6L), puis la remontée du signal DTR (notée 3 sur la figure 6F), et enfin la remontée du signal CKCP, notée 4 sur la figure 6L.

Par ailleurs, on voit que le signal DTR n'est vrai qu'après la fin du comptage de la valeur numérique selon l'invention. Ce signal DTR est appliqué à une porte ET 561, qui reçoit aussi la sortie décodée 6 du compteur 510 (signal Q6 de la figure 6G). En présence de ce signal Q6, appliqué à l'entrée LE du compteur 570, ce dernier transfère la valeur mesurée de sa section comptage à sa section mémoire. Peu après, la sortie décodée 8 du compteur 510 est à son tour excitée (figure 6H), et cette sortie est appliquée en même temps que le signal DTR à la porte ET 562, pour remettre à zéro la section comptage du compteur principal 570. La sortie de la porte ET 562 est également appliquée à travers une porte OU 582 pour la remise à zéro des compteurs 520 et 550, permettant ainsi leur redémarrage. On notera également que la porte 582 reçoit le signal issu de la porte ET 105 de la figure 3, pour assurer aussi la remise à zéro de ces compteurs lorsque la sortie de la porte ET 105 vaut 1 (condensateur 103 chargé). En fin, le signal TR était resté vrai jusqu'à cette remise à zéro. Après complémentation par l'inverseur 583, le signal $\overline{TR}$ était utilisé de la manière déjà indiquée pour faire conduire le transistor à effet de champ 421 (figure 3), et bloquer ainsi l'oscillateur à la fréquence étalon tant que le signal TR est à l'état vrai.

Pour bien comprendre le fonctionnement des circuits de la figure 4, il convient de se rappeler que ceux-ci sont alimentés en permanence. Pour chaque nouvelle mesure, avec actionnement du bouton-poussoir 101 de la figure 3, il demeure donc dans l'état défini à la fin de la mesure précédente.

On comprendra alors aisément comment est produit le signal VR déjà mentionné. Si le bouton-poussoir de loupe 537 n'est pas actionné, le premier front de montée du signal DTR va produire un passage de la bascule 538 à l'état faux, sa sortie Q étant donc au niveau zéro, et le signal VR valant zéro. C'est le fonctionnement avec arrondi décrit précédemment, en référence aux figures 6K et 6L. Si au contraire l'opérateur exerce une pression sur le bouton-poussoir 537, le premier front montant du signal DTR va faire passer la bascule 538 à l'état vrai, le signal VR valant alors 1, et c'est le fonctionnement avec loupe et sans arrondi décrit précédemment en référence aux figures 6I et 6J.

Il convient maintenant de se rappeler que le circuit 100 commande l'alimentation des convertisseurs 300 et 400 pendant environ une minute, ce qui correspond à de nombreux cycles de mesure tel que celui illustré sur la figure 6. Après la première mesure, celle-ci est donc transférée dans la partie mémoire du compteur 570, tandis qu'une nouvelle mesure est faite dans sa partie comptage.

La partie mémoire du compteur 570 est prévue pour fonctionner avec un affichage multiplexé, pour lequel elle sort les indications relatives à chaque chiffre décimal sur des sorties a à g, qui sont donc appliquées à un afficheur décimal 701. Des sorties de décades, notées 1, 10, 100 et 1000, sont appliquées à un jeu de portes ET 702, dont les sorties commandent par l'intermédiaire d'inverseurs 703 les différents afficheurs individuels du circuit 701.

Une bascule 580, de type D, reçoit sur son entrée d'horloge le signal TR, actif par ses fronts montants, et son entrée D le signal FM/5120. La sortie Q de cette bascule 580 va donc passer au niveau 1 sur le front montant du signal TR, pourvu que l'oscillateur à fréquence de mesure ait dépassé 5120 (cela pourra ne pas se produire pour la toute première mesure après actionnement du bouton-poussoir 101 de la figure 3). Dès que cette condition est réalisée, la sortie Q de la bascule 580 vient valider les portes 702, et permettre ainsi l'affichage de la valeur mesurée. Cet affichage est rafraîchi chaque fois que le compteur 570 transfère une nouvelle valeur de sa section comptage dans sa section mémoire. Dans l'hypothèse où le comptage à la fréquence de mesure n'a pas dépassé 5120 (cas déjà vu), ou bien dépasse au contraire deux fois 5120 (dépassement de la pleine échelle), c'est alors la sortie $\overline{Q}$ de la bascule 580 qui est à l'état vrai. Cette sortie est appliquée à une porte ET 581, qui reçoit également une sortie divisée par 512 du compteur 550. Dans la mesure où ce compteur a dépassé la moitié de son excursion, la porte ET 581 vient donc actionner un amplificateur inverseur 706, qui à travers une résistance 703 allume une diode électroluminescente 707. La diode 707 a alors pour fonction d'indiquer que la mesure n'est pas dans la place autorisée, parce que la fréquence de mesure se trouve en dessous de la fréquence minimale, ou au-delà de la valeur maximale. La bascule 580 peut être remise à zéro par la sortie de la porte 105.

En notant P la valeur de la charge à mesurer, on voit que le montage selon la présente invention fournit la valeur numérique donnée par l'expression:

$$P = 1024 \cdot FM/FE - 5120,$$

ou bien, en posant M=1024 et N=5120, la relation plus générale:

$$P = M \cdot FM/FE - N$$

L'action sur le potentiomètre 458 de la figure 3 permet de jouer sur le rapport FE/N, et par conséquent sur la valeur de la pleine échelle de mesure.

De leur côté, les moyens 390 à 393 décrits à propos de la figure 3 permettent un ajustement de la valeur minimale de la fréquence de mesure FM, en agissant sur celle-ci au niveau du premier convertisseur capacité-fréquence 300.

Un mode particulier de réalisation de la présente invention permet également un ajustement automatique de la fréquence minimale, à l'aide des moyens illustrés sur la figure 7, qui viennent remplacer le compteur 520 de la figure 4. Le compteur 520 est maintenant dédoublé en deux compteurs 520A et 520B, pour permettre un préréglage de la valeur maximale comptée. Le signal FM/10 est appliqué directement au compteur 520B; il est appliqué au compteur 520A à travers une porte ET 526 qui reçoit également le signal TR, ainsi qu'un signal CHØ, provenant d'un circuit 525. Le compteur 520A est remis à zéro par le signal issu du circuit 100 (sortie de la porte 105). Le compteur 520B est remis à zéro par le signal issu de la porte 582, comme l'était le compteur 520 sur la figure 4. L'ensemble des sorties parallèles des compteurs 520A et 520B sont appliquées à un comparateur numérique 527, qui fournit maintenant un signal FM/N, lequel est appliqué aux circuits 531 et 580 de la figure 4 en lieu et place de la sortie du compteur 520. Lorsqu'aucune charge n'est présente sur le plateau de l'instrument de pesage, l'opérateur appuie sur un bouton-poussoir de charge zéro 528, et cette information est transformée en signal logique de manière connue par un circuit 525, d'où le signal CHØ à l'état vrai. La mesure qui se trouve alors faite par le circuit selon l'invention est introduite par le compteur 520A, dans lequel elle restera inchangée après relâchement du bouton-poussoir 528. Le compteur 520A va donc contenir une valeur N, qui correspond au nombre d'impulsions à la fréquence de mesure pour la charge nulle. Par la suite, en présence d'une charge, les impulsions comptées sont appliquées au compteur 520B seul, et lorsque celui-ci atteint le compte N défini par le compteur 520A, la sortie du comparateur numérique 527 est excitée indiquant qu'on dépasse les N impulsions à la fréquence FM qui correspondent à la charge nulle.

On voit que ce circuit permet très simplement un ajustement automatique du zéro de pesage.

A titre d'exemple, les bascules 531, 538, 539 et 580 peuvent être les modèles "4013" de NATIONAL SEMICONDUCTOR, et les compteurs 520 et 550 peuvent être les modèles "4040" vendus par la même société.

Bien entendu la présente invention n'est pas limitée par les modes de réalisation décrits ci-dessus, et s'étend à toute variante conforme à son esprit.

A cet égard, on pourra concevoir de nombreuses variantes des circuits de calcul, en particulier remplacer les composants discrets par un microprocesseur. D'un autre côté, on pourra faire intervenir une multiplication de fréquence entre les convertisseurs capacité-fréquence et les circuits de calcul, ce qui permet de faire fonctionner les convertisseurs à fréquence plus basse.

## Revendications

1. Dispositif de mesure de capacité pour instrument de pesage à transducteur capacitif, dans lequel la capacité du transducteur varie d'une valeur maximum à une valeur minimum lorsque le poids à mesurer varie de zéro à la valeur associée à la pleine échelle de mesure, du type comprenant:

. un premier convertisseur capacité-fréquence (300), opérant sur la capacité à mesurer (320, 343), et fournissant une fréquence de mesure FM inversement proportionnelle à la capacité dudit transducteur,

. un second convertisseur capacité-fréquence (400), opérant sur une capacité étalon (420), et fournissant une fréquence étalon FE,

. un circuit de calcul (500), apte à déterminer une valeur numérique P, représentative du poids mesuré, linéairement croissante avec ladite fréquence de mesure FM,

. un circuit d'affichage (700), relié au circuit de calcul (500), propre à afficher la valeur numérique P ainsi déterminée, ce dispositif étant caractérisé:

. en ce que la valeur de la fréquence étalon FE est inférieure à la valeur minimale de la fréquence de mesure FM,

. et en ce que le circuit de calcul comporte:

— un compteur de référence (550) apte à définir un signal (TR) représentant une période de référence, comptée sur un nombre prédéterminé M d'impulsions de la fréquence étalon FE,

— un compteur de mesure (510, 520) déclenché en même temps que le compteur de référence (550), et apte à compter un autre nombre prédéterminé N d'impulsions à la fréquence de mesure FM,

— un compteur principal à mémoire (570), et

— des moyens logiques (530 à 532) pour appliquer à ce compteur principal (570) les impulsions à la fréquence de mesure FM existant pendant la période de référence (TR) mais après que le compteur de mesure (510, 520) a atteint le compte du nombre prédéterminé N,

de sorte que le contenu du compteur principal corresponde à la valeur numérique P selon la relation:

$$P = M \cdot \frac{FM}{FE} - N,$$

M et N étant des valeurs numériques telles que P égale zéro pour la valeur maximum de capacité et P égale la valeur numérique associée à la pleine échelle de mesure pour la valeur minimum de capacité.

2. Dispositif de mesure de capacité selon la revendication 1, caractérisé en ce que le fonctionnement du premier convertisseur capacité-fréquence (300) est continu, tandis que le fonctionnement du second convertisseur capacité-fréquence (400) est intermittent avec alternance de phases de fonctionnement, permettant la détermination de la valeur numérique P, et d'inhibition, après détermination de cette valeur numérique P, le début de chaque phase de fonctionnement étant synchronisé en phase sur la fréquence de mesure FM, délivrée par le premier convertisseur capacité-fréquence (300).

3. Dispositif de mesure de capacité selon l'une des revendications 1 et 2, caractérisé par le fait que chaque convertisseur capacité-fréquence (300; 400) comprend un amplificateur opérationnel (340; 440) sur lequel la capacité associée (320, 343; 420) est branchée en montage intégrateur, suivi d'un circuit comparateur (360; 460) à deux sorties dont l'une (364; 463) fournit la fréquence de sortie FM; FE et l'autre (362; 462) est bouclée sur l'entrée inverseuse de l'amplificateur opérationnel (340; 440).

4. Dispositif de mesure de capacité selon la revendication 3, caractérisé par le fait que le seuil de déclenchement de l'un (460) des circuits comparateurs est réglable.

5. Dispositif de mesure de capacité selon l'une des revendications 3 et 4, caractérisé par le fait que le premier convertisseur capacité-fréquence (300) comporte un moyen capacitif (350; 351; 352) pour compenser ses retards internes.

6. Dispositif de mesure de capacité selon l'une des revendications 3 à 5, caractérisé par le fait que le premier convertisseur capacité-fréquence (300) comporte des moyens (390 à 393) pour la production d'un signal de correction qui modifie le seuil de comparaison d'une quantité inversement proportionnelle à la fréquence de mesure FM, le coefficient de cette modification étant réglable, ce qui permet un réglage du zéro manuel.

7. Dispositif de mesure de capacité selon l'une des revendications 3 à 6, caractérisé en ce que la connexion entre une armature (320) du transducteur capacitif et l'entrée inverseuse de l'amplificateur opérationnel associé (340) est blindée, en ce que ce blindage est relié au châssis métallique voisin du transducteur, et en ce qu'il est prévu un autre amplificateur opérationnel (345) apte à annuler la différence de potentiel existant entre ladite connexion, d'une part, et le blindage et le châssis, d'autre part.

8. Dispositif de mesure de capacité selon la revendication 1, caractérisé par le fait que le circuit compteur de mesure (510, 520) comporte un premier étage compteur à décade (510), et que les moyens logiques (530 à 532) sont commutables (536 à 542) pour n'autoriser le comptage que sur un nombre entier de périodes du compteur à décade (510), ce qui permet d'arrondir sur commande un chiffre de la valeur numérique affichée.

9. Dispositif de mesure de capacité selon la revendication 1, caractérisé par le fait que le compteur de mesure (510, 520) est au moins pour partie un compteur préréglable (520), et qu'il est prévu un moyen de commande pour prérégler le nombre N en agissant sur ce compteur (520) pour un état prédéterminé de la capacité à mesurer, tel que l'absence de charge sur l'instrument de pesage.

**Patentansprüche**

1. Vorrichtung zur Kapazitätsmessung für eine Wägevorrichtung mit einem kapazitiven Aufnehmer, bei welcher sich die Kapazität des Aufnehmers von einem maximalen Wert auf einen minimalen Wert ändert, wenn sich das zu bestimmende Gewicht von Null auf den dem Skalenendwert entsprechenden Betrag ändert, mit einem ersten Kapazitäts/Frequenz-Wandler (300) für die Meßkapazität (320, 343), welcher eine der Kapazität des Aufnehmers umgekehrt proportionale Meßfrequenz FM liefert, einem zweiten Kapazitäts/Frequenz-Wandler (400) für eine Normalkapazität (420), welcher eine Normalfrequenz FE liefert, einer Rechenschaltung (500) zum Ermitteln eines ein Maß für das zu bestimmende Gewicht darstellenden Zahlenwertes P, der entsprechend der Meßfrequenz FM linear zunimmt, und einer mit der Rechenschaltung (500) verbundenen Anzeigeschaltung (700) zum Anzeigen des ermittelten Zahlenwertes P, dadurch gekennzeichnet, daß die Normalfrequenz FE niedriger ist als der minimale Wert der Meßfrequenz und daß die Rechenschaltung einen Bezugszähler (550) zum Festlegen eines eine Bezugsperiode darstellenden Signals TR durch Zählen einer vorbestimmten Anzahl M von Impulsen mit der Normalfrequenz FE, einen Meßzähler (510, 520), der zu den gleichen Zeitpunkten ausgelöst wird wie der Bezugszähler (550), zum Zählen einer anderen vorbestimmten Anzahl N von Impulsen mit der Meßfrequenz FM, einen speichernden Hauptzähler (570) und Logikbauteile (530—532) zum Zuführen der Impulse mit der Meßfrequenz FM, welche während der Bezugsperiode TR, aber nachdem der Meßzähler (510, 520) den vorbestimmten Zählerstand N erreicht hat, auftreten, an den Hauptzähler (570) aufweist, so daß der Stand des Hauptzählers dem Zahlenwert P gemäß dem Zusammenhang

$$P = M \times (FM/FE) - N$$

entspricht, wobei M und N solche Zahlenwerte haben, daß für den maximalen Kapazitätswert P gleich Null ist und für den minimalen Kapazitätswert P gleich dem dem Skalenendwert entsprechenden Betrag ist.

2. Vorrichtung zur Kapazitätsmessung nach Anspruch 1, dadurch gekennzeichnet, daß der erste Kapazitäts/Frequenz-Wandler (300) dauernd in Betrieb ist, wogegen der zweite Kapazitäts/Frequenz-Wandler (400) mit Unterbrechungen in Betrieb ist, wobei abwechselnd der Zahlenwert P in einer Phase der Funktion bestimmt wird und nach Bestimmung dieses Zahlenwertes P eine Phase der Unterbrechung folgt und wobei der Beginn jeder Phase der Funktion in Phase mit der Meßfrequenz FM synchronisiert ist, welche vom ersten Kapazitäts/Frequenz-Wandler (300) geliefert wird.

3. Vorrichtung zur Kapazitätsmessung nach Anspruch 1 oder 2, dadurch gekennzeichnet, daß jeder Kapazitäts/Frequenz-Wandler (300; 400) einen mit einem Kondensator (320, 343; 420) zur Funktion als Integrator beschalteten Operationsverstärker (340; 440) und einen nachfolgenden Vergleicher (360; 460) mit zwei Ausgängen aufweist, von denen jeweils der eine (364; 463) die Ausgangsfrequenz FM; FE liefert und der andere (362; 462) mit dem invertierenden Eingang des Operationsverstärkers (340; 440) verbunden ist.

4. Vorrichtung zur Kapazitätsmessung nach Anspruch 3, dadurch gekennzeichnet, daß die Ansprechschwelle des einen Vergleichers (460) einstellbar ist.

5. Vorrichtung zur Kapazitätsmessung nach Anspruch 3 oder 4, dadurch gekennzeichnet, daß der erste Kapazitäts/Frequenz-Wandler (300) zum Kompensieren seiner inneren Nacheilungen bzw. Verzögerungen mit Kapazitäten (350; 351; 352) beschaltet ist.

6. Vorrichtung zur Kapazitätsmessung nach einem der Ansprüche 3 bis 5, dadurch gekennzeichnet, daß der erste Kapazitäts/Frequenz-Wandler (300) Schaltungselemente (390—393) zum Erzeugen eines Korrektursignals aufweist, welches die Vergleichsschwelle um einem zur Meßfrequenz FM umgekehrt proportionalen Betrag ändert, wobei der Koeffizient dieser Änderung einstellbar ist, um eine manuelle Nulleinstellung zu ermöglichen.

7. Vorrichtung zur Kapazitätsmessung nach einem der Ansprüche 1 bis 6, dadurch gekennzeichnet, daß eine Platte (320) des kapazitiven Aufnehmers mit dem invertierenden Eingang des zugeordneten Operationsverstärkers (300) über eine abgeschirmte Anschlußleitung verbunden ist, daß die Abschirmung mit dem benachbarten metallischen Chassis des Aufnehmers verbunden ist und daß ein weiterer Operationsverstärker (345) zum Annullieren der Potentialdifferenz zwischen der Anschlußleitung einerseits und der Abschirmung und dem Chassis andererseits vorgesehen ist.

8. Vorrichtung zur Kapazitätsmessung nach Anspruch 1, dadurch gekennzeichnet, daß die Schaltung des Meßzählers (510, 520) an der ersten Stelle einen Dekadenzähler (510) aufweist und daß die Logikbauteile (530—532) umsteuerbar sind (536—542), um einen Zählvorgang nur über eine ganze Anzahl von Perioden des Dekadenzählers (510) zuzulassen, wodurch die Rundung einer angezeigten Ziffer der Zahl ermöglicht ist.

9. Vorrichtung zur Kapazitätsmessung nach Anspruch 1, dadurch gekennzeichnet, daß der Meßzähler (510, 520) wenigstens zum Teil ein voreinstellbarer Zähler (520) ist und daß er mit auf den Zähler (520) wirkenden Stellmitteln zum Voreinstellen der Zahl N für einen vorbestimmten Zustand der zu messenden Kapazität, wie beispielsweise das Fehlen einer Belastung auf der Waage, ausgestattet ist.

**Claims**

1. Capacitance measuring device for a weighing apparatus having a capacitive transducer, in which the capacitance of the transducer varies from a maximum value to a minimum value when the weight to be measured varies from zero to the value associated with the full scale measurement, of the type comprising:

a first capacitance/frequency converter (300), operating on the capacitance to be measured (320, 343) and providing a measuring frequency FM inversely proportional to the capacitance of the said transducer,

a second capacitance/frequency converter (400), operating on a standard capacitance (420) and providing a standard frequency FE,

a calculating circuit (500) able to determine a numerical value P, representative of the weight measured and increasing in a linear manner with the said measuring frequency FM,

a display circuit (700), connected to the calculating circuit (500), able to display the numerical value P thus determined, this device being characterized:

in that the value of the standard frequency FE is less than the minimum value of the measuring frequency FM,

and in that the calculating circuit comprises:

a reference counter (550) able to define a signal (TR) representing a reference period, counted over a pre-determined number M of pulses of the standard frequency FE,

a measuring counter (510, 520) actuated at the same time as the reference counter (550) and able to count another pre-determined number N of pulses at the measuring frequency FM,

a main counter comprising a memory (570) and logic means (530 to 532) for applying to this main counter (570) the pulses at the measuring frequency FM existing during the reference period (TR) but after the measuring counter (510, 520) has counted the pre-determined number N, so that the contents of the main counter corresponds to the numerical value P according to the relationship:

$$P = M \cdot \frac{FM}{FE} - N,$$

M and N being numerical values such that P equals zero for the maximum value of capacitance and P equals the numerical value associated with the full measuring scale for the minimum value of capacitance.

2. Capacitance measuring device according to Claim 1, characterised in that the operation of the first capacitance/frequency converter (300) is continuous, whereas the operation of the second capacitance/frequency converter (400) is intermittent with alternation of operating phases, allowing the determination of the numerical value P and inhibition phases, after determining this numerical value P, the beginning of each operating phase being synchronised in phase with the measuring frequency FM, supplied by the first capacitance/frequency converter (300).

3. Capacitance mesuring device according to one of Claims 1 and 2, characterised by the fact that each capacitance/frequency converter (300; 400) comprises an operational amplifier (340; 440) with which the associated capacitance (320, 343; 420) is connected to form an integrator stage, followed by a comparator circuit (360; 460) comprising two outputs, whereof one output (364; 463) provides the output frequency FM; FE and the other output (362; 462) is looped to the inverting input of the operational amplifier (340; 440).

4. Capacitance measuring device according to Claim 3, characterised by the fact that the tripping threshold of one (460) of the comparator circuits is adjustable.

5. Capacitance measuring device according to one of Claims 3 and 4, characterised by the fact that the first capacitance/frequency converter (300) comprises capacitive means (350; 351; 352) for compensating for its internal delays.

6. Capacitance measuring device according to one of Claims 3 to 5, characterised by the fact that the first capacitance/frequency converter (300) comprises means (390 to 393) for the production of a correction signal which modifies the comparison threshold of a quantity inversely proportional to the measuring frequency FM, the co-efficient of this modification being adjustable, which allows an adjustment of the manual zero.

7. Capacitance measuring device according to one of Claims 3 to 6, characterised in that the connection between an armature (320) of the capacitive transducer and the inverting input of the associated operational amplifier (340) is screened, in that this screening is connected to the adjacent metal frame of the transducer and in that another operational amplifier (345) is provided able to cancel the potential difference existing between the said connection, on the one hand and the screening and the frame, on the other hand.

8. Capacitance measuring device according to Claim 1, characterised by the fact that the measuring counter circuit (510, 520) comprises a first decade counter stage (510) and that the logic means (530 to 532) are able to be switched over (536 to 542) so as to allow counting solely over a whole number of periods of the decade counter (510), which makes it possible to round-off on command one figure of the numerical value P displayed.

9. Capacitance measuring device according to Claim 1, characterised by the fact that the measuring counter (510, 520) is at least partly a pre-adjustable counter (520) and that control means are provided for pre-regulating the number N by acting on this counter (520) for a pre-determined state of the capacitance to be measured, such as the absence of load on the weighing instrument.

FIG_1

FIG_2

0 033 705

FIG_3

FIG_4

SORTIE 340 (sans correction)  (A)

SORTIE 362  (B)

COURANT ENTRÉE DE 340 (correction)  (C)

SORTIE 340 (avec correction)  (D)

COURANT INJECTÉ PAR 392  (E)

FIG_5

DE 510 (FIG. 4)

VERS 539 ET 540 (FIG.4)

FM/10

TR

CHARGE ZÉRO

CH∅

526

528    525

520A    520B

(DE 100 FIG. 3)    RST    527    RST    DE 582 (FIG.4)

FIG_7

FM/N ( VERS 531 ET 580 FIG. 4 )

4

FIG_6

0 033 705